# EUROPEAN PATENT SPECIFICATION

(11) **EP 2 488 457 B1**
(45) Date of publication and mention of the grant of the patent: **27.02.2019**
(21) Application number: 10768750.1
(22) Date of filing: 14.10.2010
(51) Int. Cl.: C02F 3/30

(54) **ANAEROBIC/AEROBIC LIQUID PURIFICATION SYSTEM AND METHOD THEREFOR**
REINIGUNGSSYSTEM FÜR ANAEROBE/AEROBE FLÜSSIGKEIT UND VERFAHREN DAFÜR
SYSTÈME DE PURIFICATION DE LIQUIDE ANAÉROBIE/AÉROBIE ET PROCÉDÉ CORRESPONDANT

(30) Priority: 16.10.2009 US 252265 P
(43) Date of publication of application: 22.08.2012
(73) Proprietor: Dutch Water Technologies B.V., 8934 CJ Leeuwarden (NL); Aqwise - Wise Water Technologies Ltd., 46733 Herzliya (IL)
(72) Inventor: ARBEL, Tamar, 21940 Karmiel (IL); ASSULIN, Nir, 38860 Emek Hefer (IL); ENGELAAR, Antonius Johannes Hendrikus Hyacintus, NL-8625 TH Oppenhuizen (NL); YALIN, Tammy, Netanya (IL)
(74) Representative: Verdijck, Gerardus
(86) International application number: PCT/EP2010/065459
(87) International publication number: WO 2011/045392

(56) References cited:
- WO-A1-98/19971
- WO-A1-2009/096797
- WO-A2-2006/137736
- US-A1- 2003 085 171

## Description

The present invention relates to an anaerobic/aerobic purification system. This system purifies the liquid. More specifically, the liquid relates to water treatment in general and more specifically to waste water treatment.

Conventional purification systems with aerobic systems result in energy inefficient purification. Other conventional combined anaerobic/aerobic systems result in complex and expensive systems that require very high waste loads to become economically feasible to some extent.

WO 2009/096797 discloses a reactor for treating waste water in a single reactor with an anoxial/anaerobic and an aerobic volume.

US 2003/085171 discloses an anaerobic-aerobic process for treatment of waste water involving mixing the liquor in the anaerobic step by at least one controllable gas lift.

The object of the present invention is to improve purification systems to enable purification of a liquid in a more effective and/or efficient manner.

This object is achieved with the anaerobic/aerobic liquid purification system, the system comprising a reactor according to claim 1.

Preferably, the liquid relates to an aqueous liquid such as a water flow and more specifically a waste water flow. However, treating other process flows with the system according to the invention is also possible.

The anaerobic/aerobic liquid purification system performs anaerobic and aerobic biological processes that take place in one system or reactor, thereby realizing a type of dynamic anaerobic/aerobic (DANA) reactor.

The anaerobic and aerobic processes are integrated by connecting the inlet of the aerobic subsystem to the outlet of the anaerobic subsystem using connecting means. For example, these connecting means comprise a connecting pipe enabling transfer of the anaerobic treated liquid to the aerobic subsystem. This realizes an integrated hybrid system capable of an efficiently purification of liquid, such as waste water, with a high load of organic material requiring minimal energy and costs.

In addition, the system minimizes the residual material. The DANA reactor shows a so-called foot print of about 50% as compared to conventional systems. In addition the emission of odorous components is brought down. Furthermore, operational costs will be reduced by about 40% as compared to existing conventional systems. These effects achieve a more effective and efficient system according to the invention as compared to conventional systems.

As a further advantage of the present invention, the integrated system has modest installation service requirements as compared to existing conventional systems. This reduces installation costs. Furthermore, the system according to the invention is capable to treat highly polluted waste water. This renders the system especially relevant for industries that expel waste water with relatively high loads of organic matter such as pulp and paper, beverage and food. Also a flow originating from an industrial source and/or a municipal source can be treated efficiently in the system according to the present invention.

Most conventional wastewater treatment processes are 'aerobic' - the bacteria used to break down the waste products take in oxygen to perform their function. This results in a high energy requirement (oxygen has to be supplied) and a large volume of waste bacteria ('sludge') which is produced during the process. Aerobic systems are considered to be fast and easy to maintain. However, they fail to handle influents with high organic load efficiently, thus, in most cases are not suitable for industrial wastewater treatment.

The bacteria in 'anaerobic' processes do not require oxygen for their metabolic functions. Excluding oxygen is easy, and the energy requirements and sludge production is, due to the slow growth rate of the anaerobic biomass, much less than for aerobic processes The gas produced during the process can be used as energy source, thus reduce process costs. However, the process is complex, process costs are higher and a professional manpower is needed.

Although capable of treating highly polluted influents, anaerobic processes are much slower than aerobic processes and are only suitable for removing organic matter and not any other sort of pollution, such as nutrients, or pathogens. In addition, anaerobic processes generally like 'steady' effluents they can't cope with variations in flow or composition. For example, anaerobic processes cannot cope with hydraulic and/or toxic shock loads that are quite common in the industrial sector.

According to the invention, the impact of the above shock loads is significantly reduced. In the anaerobe treatment the shock load is reduced using the (excess) biomass. In a presently preferred embodiment according to the invention biomass is inoculated on a carrier. Thus, toxic loads are less of a hazard to the bacteria. Biomass production will increase during the treatment of the shock load. Therefore, the shock load is damped when transferred from the anaerobe subsystem to the aerobe subsystem. This reduces the problem of occurring shock loads enabling an effective treatment thereof with the integrated system according to the present invention.

Treatment in the subsystems of the system according to the present invention may use various configurations, such as a Moving Bed Bio Reactor (MBBR), Integrated fixed Film Activated Sludge (IFAS) and Moving Bed Clarifying Reactor (MBCR) .

In a preferred embodiment according to the present invention pressure in the anaerobic liquid purification subsystem is operative to pump the anaerobic treated output with the connecting means from the anaerobic water purification subsystem to the aerobic purification subsystem.

In the anaerobic subsystem biogas is produced. Preferably, the gas volume is substantially kept constant using a valve. The anaerobic subsystem is provided with influent. Therefore, the anaerobic subsystem causes liquid to move to the aerobic subsystem. This prevents the use of an additional pump thereby rendering the system more cost effective. This further integrates the two different subsystems.

Preferably, a gas collection volume is located in a head space above the anaerobic water purification subsystem. This gas collection volume collects the gas produced by the anaerobic liquid purification system. This achieves a kind of pressure vessel for driving the anaerobic treated liquid from the anaerobic subsystem to the aerobic subsystem. Preferably, the collected gas pressure is controlled by a reducing valve or a water column. This ensures that a desired height of the gas blanket is achieved and is being maintained.

In a preferred embodiment according to the present invention the aerobic water purification subsystem is positioned physically above the anaerobic liquid purification subsystem.

By positioning the two subsystems physically above each other an effective configuration is achieved. Preferably, this configuration is combined with the connection pipe between the two subsystems enabling driving the treated liquid between the two subsystems as mentioned above. This achieves an efficient system for treating the liquid according to the invention.

According to the present invention the anaerobic liquid purification subsystem includes biomass carriers for supporting anaerobic micro-organisms.

By providing anaerobic subsystem with the biomass carriers the anaerobic micro-organisms are supported and thereby enable an efficient operation of this biomass. The use of these biomass carriers in the anaerobic subsystem enables the omission of the conventional three phase separation, thereby rendering the system according to the invention more effective. Detailed operation of a preferred embodiment of these biomass carriers is described in one of the applicant/assignee's European Published Patent Application No. 1401775 and PCT Published Patent Application No. WO 2009/107128. Any other suitable biomass carriers may also be employed.

Preferably, gas supply means are provided in the system according to the invention for supplying gas to the anaerobic liquid purification subsystem. This gas supply functionality enhances mixing and prevents shortcuts in the bed. In combination with the above biomass carriers the supplied gas causes relative movement of the carriers that is especially relevant in a fluidized bed configuration.

Preferably, the gas supply means in the anaerobic subsystem are connected to the gas connection volume mentioned above. This enables the effective use of the produced biogas in the anaerobic subsystem. This prevents the anaerobic system using external sources for this specific operation.

In a further preferred embodiment according to the present invention the aerobic purification subsystem further comprises Moving Bed Biofilm Reactor means.

Providing a moving or fluid bed in the aerobic subsystem enables an effective operation for the process performed in the system according to the present invention. In a presently preferred embodiment both the anaerobic and aerobic subsystems use a fluid bed configuration preferably using the biomass carriers mentioned above.

In a further preferred embodiment according to the present invention the system further comprises recirculation means.

By providing recirculation means it is possible in the anaerobic subsystem to strip a part of the formed CO₂ of the produced biogas. This causes a pH increase of the anaerobic effluent thereby reducing the reagents consumption significantly. This improves the operation in the anaerobic subsystem. In addition, or in combination therewith, the recirculation means can be used to recirculate (part of the) anaerobic and/or aerobic effluent to a recirculation (pre-) tank or pre-acidification tank to further improve the overall treatment.

Preferably, the biomass carriers mentioned above in relation to the anaerobic subsystem are used. It has been shown that such carriers improve the efficiency of the purification operation in the anaerobic system.

In addition, the anaerobic system may be combined or use one or more of the technical features described above.

The invention further also relates to a method according to new claim 9.

The same effects and advantages apply in respect of such a method as those described in respect of the anaerobic/aerobic system. The method may use one or more of the technical features described above for the system.

Further advantages, features and details of the invention are elucidated on the basis of preferred embodiments thereof,
- Fig. 1 shows an embodiment of the system according to the invention;
- Fig. 2 shows a simplified illustration of a synergetic anaerobic/aerobic water purification system constructed and operative in accordance with a preferred embodiment of the present invention;
- Fig. 3 shows a simplified illustration in accordance with another preferred embodiment of the present invention;
- Fig. 4 shows a simplified illustration of a system as an alternative to the present invention for illustrative purposes only;
- Fig. 5 shows a simplified illustration of a system as an alternative to the present invention for illustrative purposes only; and

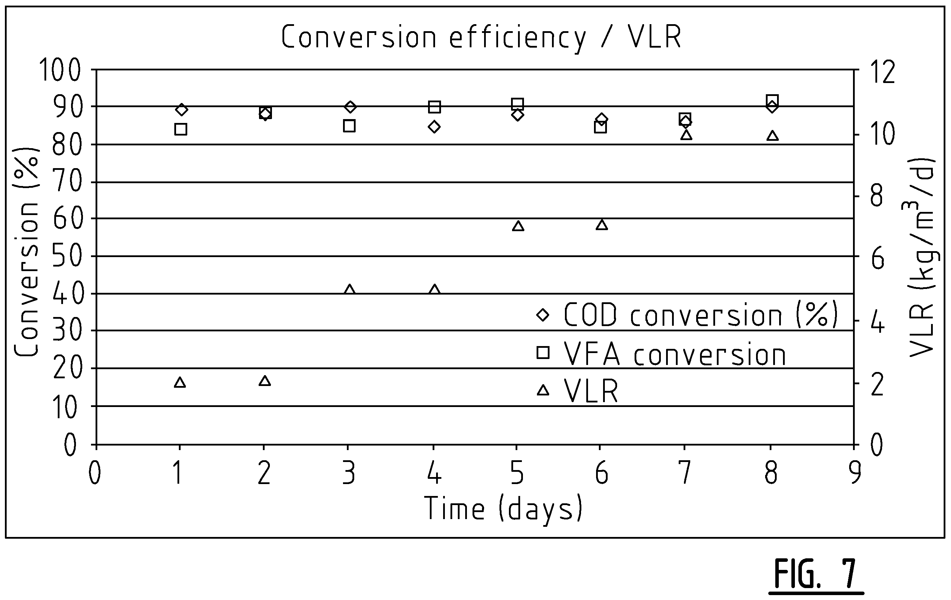

- Figs. 6-7 show experimental results with the system according to the invention.

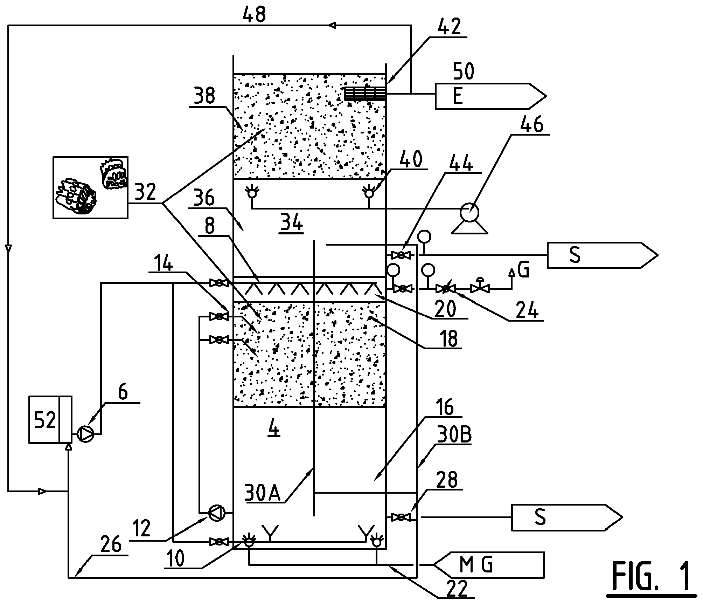

A preferred embodiment of a system 2 according to the present invention is shown in figure 1 wherein anaerobic tank 4 includes upper zone 18 with the biomass carriers 32 and a lower zone below the biomass carrier's level, designated by reference numeral 16.

In the illustrated embodiment the biomass carriers 32 can be in moving bed mode and can be mixed continuously or intermittently. In another preferred embodiment of the present invention the biomass carriers can be set in a fixed mode and mixed/vibrate periodically.

Pre-acidification of wastewater takes place in the pre-acidification tank 52.

The aerobic and anaerobic effluent can be circulated and partly return to the pre-acidification tank 52. This
enables to dilute concentrated wastewater while creating influent with constant feed load. In addition, in the pre-acidification tank nitrogen, phosphorus, pH, temperature and anti-foam can be regulated if needed.

Wastewater after pre-acidification tank 52 is supplied to the system by feeding pump 6, and introduced to the reactor in a downflow stream by sprinklers 8, positioned at the top of the gas head space 20 of the anaerobic area. Influent is sprayed on top of the fluidizing bed 18 that consists of attached biomass on floating biomass carriers 32. Fluid flows from top to bottom and through the biomass carriers. The organic matter is converted by the anaerobic biomass into biogas. The produced biogas rises towards the gas head space 20 above the upper anaerobic zone 18.

Releasing biogas entrapped between the biomass carriers and in the cavities of the carriers, can be achieved by Mixing Gas (MG) injection 22 and/or jets 14.

Gas injection 22 can take place at the bottom of the anaerobic area 16 of reactor 4 through gas injectors. Gas bubbles rise towards the top biogas layer of the anaerobic area. During the rising of the bubbles the consistency of the carrier bed is disturbed and channeling is prevented. In addition, biogas is released.

In another preferred embodiment of the present invention, jets 14 can be placed in the wall of the upper anaerobic zone 18. The circulation of anaerobic effluent will cause movement of the carrier material bed, preventing channeling.

To ensure a constant height of the gas blanket, the collected gas pressure is controlled by special developed reducing valve 24 or by water column at a height equal or above the aerobic wastewater level (not shown).

The biogas produced in the anaerobic tank 4, consists primarily of methane (CH₄) and carbon-dioxide (CO₂) . Due to recirculation, part of the formed CO₂ is stripped and causes pH increase of the anaerobic effluent. This reduces the reagents consumption dramatically.

Biological conversion of up to 90% of, mainly, organic matter is performed by the attached anaerobic biomass. To ensure efficient conversion of up to 90% of the organic matter in the anaerobic area of the reactor and to encourage anaerobic biomass attachment on the carriers, the flow through and the hydraulic retention time (refresh rate) of the wastewater has to be sufficiently high.

The immobilization of anaerobic biomass on the carrier will prevent anaerobic biomass transportation to the aerobic reactor.

In another preferred embodiment of the present invention the wastewater inlet conduit 10 for an upflow mode can be applied.

Biomass carriers 32 have a density below the density of water. In another preferred embodiment of the present invention, carriers can have a density equal or above to the water density.

Wastewater mixing at tank 4 can be performed by internal circulation of wastewater from the bottom of tank 4, using pump 12 and spreading the circulated wastewater by means of diffusers or jets 14.

In another preferred embodiment of the present invention mixing can be carried out by mechanical mixer (not shown).

The construction of the apparatus and the use of biomass carriers in anaerobic tank 4 will enable to waive the conventional three-phase separation, before biogas collection.

The anaerobic sludge S at the bottom of tank 4 can be mixed by mechanical mixer, circulation pump or any other mixing device. In addition, the anaerobic sludge S can be drained from tank 4 by means of drain valve 28. Anaerobic effluent from tank 4 passes on to the aerobic tank 34 via internal riser 30A for further conversion of organic matter. Alternatively, the transition of the wastewater from the anaerobic tank 4 to the aerobic tank 34 can be performed by an external pipe 30B. In addition, anaerobic and/or aerobic effluent can be returned to the pre-acidification tank 52 by means of recirculation pipe 26 and/or 48.

The aerobic tank 34 consist of diffusers 40 that can be installed on the floor level or at a height above it, to apply as Moving Bed Biofilm reactor (MBBR) or Moving Bed Clarifying Reactor (MBCR) (PCT/IL 2009/000825) respectively. When MBCR configuration is applied, a gas diffuser assembly is arranged generally between the upper biological treatment turbulence region 38 and the lower solids settling region 36 for providing gas bubbles, which move upwardly through wastewater in the tank and through the biomass carriers 32 in the upper turbulence region 38, providing turbulent motion of the wastewater in region 38. Gas, typically pressurized air, is supplied to the gas diffuser assembly 40 via a gas inlet 46. The gas diffuser outlets 40 may include any one or more of coarse and fine bubble diffusers and jets. Sludge S produced in the aerobic part is drained by valve 44.

The treated effluent E 50 from the aerobic tank 34 leaves the reactor via a wedge wire screen 42 coupled to the wastewater outlet in order to prevent carriers 32 from leaving the reactor.

Since most of the organic matter conversion is performed in the anaerobic tank 4 of the reactor, the energy required for aeration of the aerobic area 34 is reduced, as compared to conventional systems. The aerobic area 34 is filled with biomass carriers, to increase the effective surface area and immobilize bacteria to prevent wash out and conversion. The reduced concentration of organic matter entered to tank 34 and the large contact area in the reactor results in an efficiently aerobic area. The energy consumption compared to conventional aerobic conversion is hereby significantly reduced.

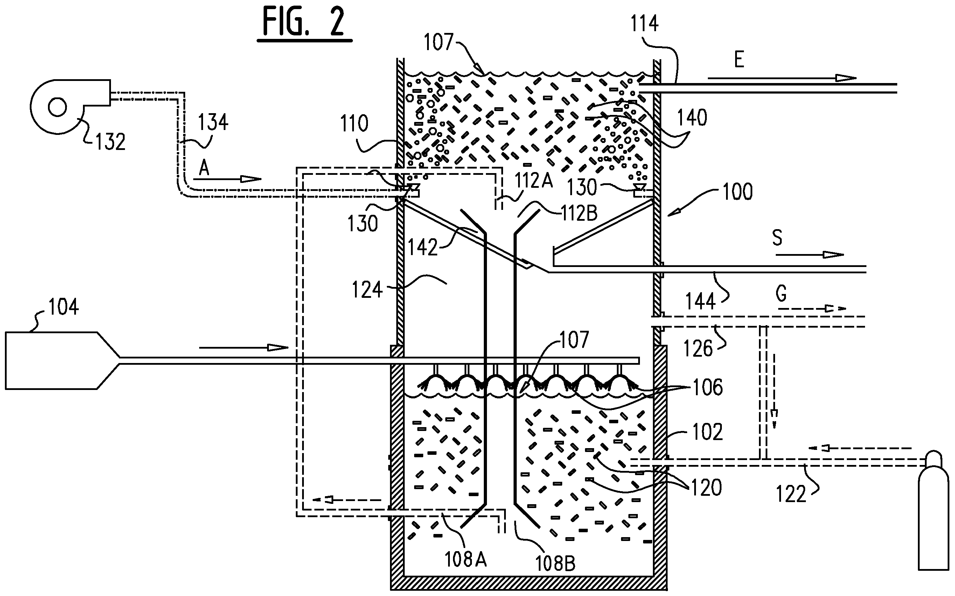

Reference is now made to Fig. 2, which is a simplified illustration of a synergetic anaerobic/aerobic water purification system constructed and operative in accordance with another preferred embodiment of the present invention. As seen in Fig. 2, there is provided an integrated reactor, designated generally by reference numeral 100, which includes an anaerobic water purification subsystem 102, receiving water to be treated, such as waste water, at an inlet 104. Preferably the waste water is supplied from above by means of a plurality of nozzles 106, which are coupled to inlet 104. The water level in anaerobic water purification subsystem 102 is typically as designated by reference numeral 107.

In the illustrated embodiment the anaerobic water purification subsystem 102 provides an anaerobic-treated water output via an outlet 108 to an aerobic water purification subsystem 110, integrated with the anaerobic water purification subsystem 102 and preferably physically located there above, which receives the anaerobic-treated water output at an inlet 112 and provides an anaerobic- and aerobic-treated water output as an effluent E at an outlet 114. If appropriate, the effluent E from outlet 114 may be further treated by any suitable technique.

In accordance with a preferred embodiment of the present invention, the anaerobic water purification subsystem 102 includes a multiplicity of biomass carriers 120 which are disposed in water to be treated. Biomass carriers 120 are operative to support anaerobic microorganisms. The structure and operation of a preferred embodiment of biomass carriers is described in one of the applicant/assignee's European Published Patent Application No. 1401775 and PCT Published Patent Application No. WO 2009/107818. Any other suitable biomass carriers may be employed.

Optionally, an inert gas, such as nitrogen may be periodically introduced into the water to be treated via a gas supply inlet 122 in order to produce limited relative movement of the biomass carriers 120 in order to decluster the carrier and prevent clogging thereof. Alternatively, this can be accomplished by a circulation pump disposed within the subsystem 102 and/or a gas compressor injecting biogas from the buffer.

Gas, principally methane and carbon dioxide, generated by the anaerobic water purification in subsystem 102 rises to a gas collection volume 124 in a headspace above the water being treated in anaerobic water purification subsystem 102 and is preferably released for use via a generated gas G outlet 126. Optionally, some of the generated gas may be supplied via gas supply inlet 122 in addition to or in place of the inert gas.

Pressure in anaerobic subsystem 102 causes the anaerobically treated water from to rise from anaerobic subsystem 102 through outlet 108 (A and/or B) to inlet 112 (A and/or B) in aerobic water treatment subsystem 110. Inlet 112 is preferably located in a lower portion of the aerobic subsystem 110. Disposed above inlet 112 there are preferably provided a plurality of air diffusers 130 which are coupled to a source of pressurized air 132, such as a compressor, via a pressurized air conduit 134.

The water level in aerobic water purification subsystem 110 is typically as designated by reference numeral 107. A multiplicity of biomass carriers 140 are disposed in water to be treated in aerobic water purification subsystem 100 and are operative to support anaerobic microorganisms. Any other suitable biomass carriers may be employed. Biomass carriers 140 are generally confined to the volume above diffusers 130, by the movement of air bubbles of the diffusers.

At the bottom of the aerobic water purification subsystem 110, below diffusers 130 there is preferably provided a sludge settlement volume 142, which is equipped with a sludge S outlet 144.

Preferably, the structure and operation of the aerobic water purification subsystem 110 is in accordance with the teachings of applicant/assignee's European Published Patent Application Nos. 1401775 and 2049443, and U.S. Published Patent Application No. 2009/0211972.

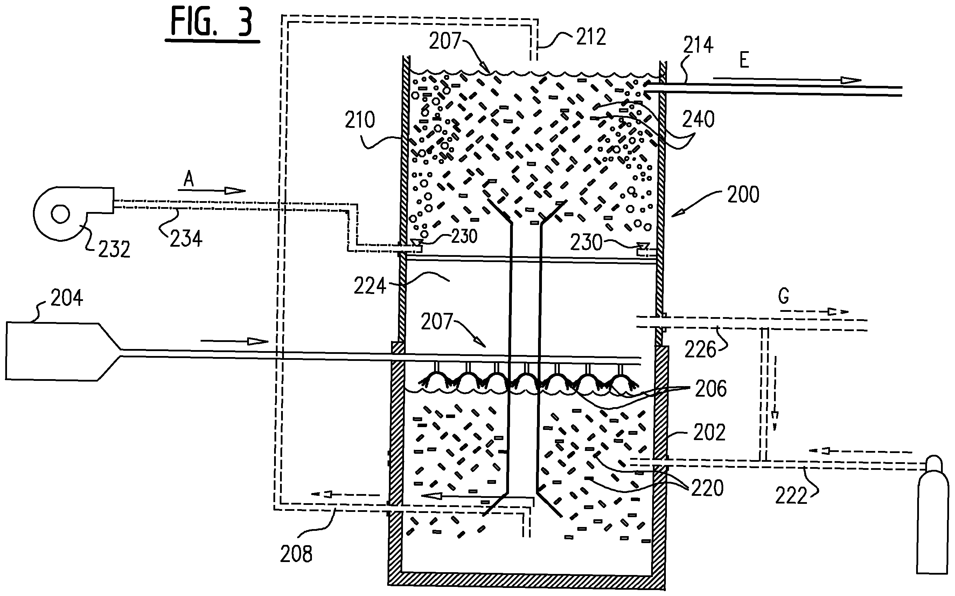

Reference is now made to Fig. 3, which is a simplified illustration of a synergetic anaerobic/aerobic water purification system constructed and operative in accordance with another preferred embodiment of the present invention. As seen in Fig. 3, there is provided an integrated reactor, designated generally by reference numeral 200, which includes an anaerobic water purification subsystem 202, receiving water to be treated, such as waste water, at an inlet 204. Preferably the waste water is supplied from above by means of a plurality of nozzles 206, which are coupled to inlet 204. The water level in anaerobic water purification subsystem 202 is typically as designated by reference numeral 207.

The anaerobic water purification subsystem 202 provides an anaerobic-treated water output via an outlet 208 to an aerobic water purification subsystem 210, integrated with the anaerobic water purification subsystem 202 and preferably physically located there above, which receives the anaerobic-treated water output at an inlet 212 and provides an anaerobic- and aerobic-treated water output as an effluent at an outlet 214. If appropriate, the effluent from outlet 214 may be further treated by any suitable technique.

In accordance with a preferred embodiment of the present invention, the anaerobic water purification subsystem 202 includes a multiplicity of biomass carriers 220 which are disposed in water to be treated. Biomass carriers 220 are operative to support anaerobic microorganisms. The structure and operation of a preferred embodiment of biomass carriers is described in applicant/assignee's European Published Patent Application No. 1401775 and PCT Published Patent Application No. WO 2009/10718. Any other suitable biomass carriers may be employed.

Optionally, an inert gas, such as nitrogen may be periodically introduced into the water to be treated via a gas supply inlet 222 in order to produce limited relative movement of the biomass carriers 220 in order to decluster the carrier and prevent clogging thereof. Alternatively, this can be accomplished by a circulation pump disposed within the subsystem 202.

Gas, principally methane and carbon dioxide, generated by the anaerobic water purification in subsystem 202 rises to a gas collection volume 224 in a headspace above the water being treated in anaerobic water purification subsystem 202 and is preferably released for use via a generated gas outlet 226. Optionally, some of the generated gas may be supplied via gas supply inlet 222 in addition to or in place of the inert gas.

Pressure in the anaerobic subsystem causes the anaerobic treated water to rise from anaerobic subsystem 202 through outlet 208 to inlet 212 in aerobic water treatment subsystem 210. Inlet 212 is preferably located in a lower portion of the aerobic subsystem 210. Disposed above inlet 212 there are preferably provided a plurality of air diffusers 230 which are coupled to a source of pressurized air 232, such as a compressor, via a pressurized air conduit 234.

The water level in aerobic water purification subsystem 210 is typically as designated by reference numeral 207. A multiplicity of biomass carriers 240 are disposed in water to be treated in aerobic water purification subsystem 200 and are operative to support anaerobic microorganisms. Any other suitable biomass carriers may be employed. Biomass carriers 240 are generally confined to the volume above diffusers 230, by the movement of air bubbles of the diffusers.

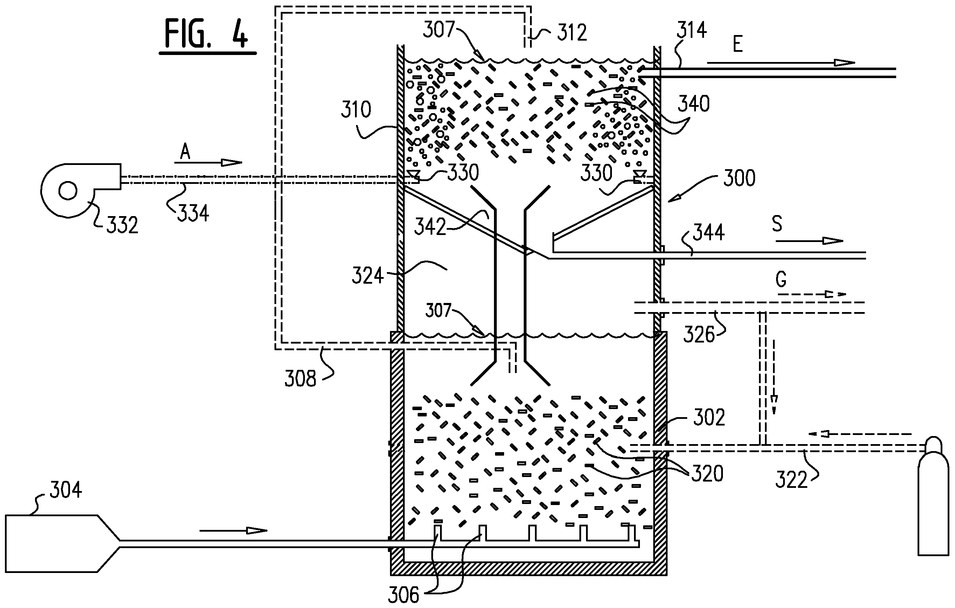

Preferably the structure and operation of the aerobic water purification subsystem 210 is in accordance with the teachings of applicant/assignee's European Published Patent Application Nos. 1401775 and 2049443, and U.S. Published Patent Application No. 2009/0211972. Reference is now made to Fig. 4 for illustrative purposes only, which is a simplified illustration of a synergetic anaerobic/aerobic water purification system as an alternative to the present invention. As seen in Fig. 4, there is provided an integrated reactor, designated generally by reference numeral 300, which includes an anaerobic water purification subsystem 302, receiving water to be treated, such as waste water, at an inlet 304. Preferably the waste water is supplied from below by means of a plurality of nozzles 306, which are coupled to inlet 304. The water level in anaerobic water purification subsystem 302 is typically as designated by reference numeral 307.

The anaerobic water purification subsystem 302 provides an anaerobic-treated water output via an outlet 308 to an aerobic water purification subsystem 310, integrated with the anaerobic water purification subsystem 302 and preferably physically located there above, which receives the anaerobic-treated water output at an inlet 312 and provides an anaerobic- and aerobic-treated water output as an effluent at an outlet 314. If appropriate, the effluent from outlet 314 may be further treated by any suitable technique.

The anaerobic water purification subsystem 302 includes a multiplicity of biomass carriers 320 which are disposed in water to be treated. Biomass carriers 320 are operative to support anaerobic microorganisms. The structure and operation of a preferred embodiment of biomass carriers is described in applicant/assignee's European Published Patent Application No. 1401775 and PCT Published Patent Application No. WO 2009/10718. Any other suitable biomass carriers may be employed.

Optionally, an inert gas, such as nitrogen may be periodically introduced into the water to be treated via a gas supply inlet 322 in order to produce limited relative movement of the biomass carriers 320 in order to decluster the carriers and prevent clogging thereof. Alternatively, this can be accomplished by a circulation pump disposed within the subsystem 302.

Gas, principally methane and carbon dioxide, generated by the anaerobic water purification in subsystem 302 rises to a gas collection volume 324 in a headspace above the water being treated in anaerobic water purification subsystem 302 and is preferably released for use via a generated gas outlet 326. Optionally, some of the generated gas may be supplied via gas supply inlet 322 in addition to or in place of the inert gas.

Pressure in the anaerobic subsystem causes the anaerobic treated water from to rise from anaerobic subsystem 302 through outlet 308 to inlet 312 in aerobic water treatment subsystem 310. Inlet 312 is preferably located in a lower portion of the aerobic subsystem 310. Disposed above inlet 312 there are preferably provided a plurality of air diffusers 330 which are coupled to a source of pressurized air 332, such as a compressor, via a pressurized air conduit 334.

The water level in aerobic water purification subsystem 310 is typically as designated by reference numeral 307. A multiplicity of biomass carriers 340 are disposed in water to be treated in aerobic water purification subsystem 300 and are operative to support anaerobic microorganisms. The structure and operation of a preferred embodiment of biomass carriers is described in applicant/assignee's European Published Patent Application No. 1401775 and PCT Published Patent Application No. WO 2009/10718. Any other suitable biomass carriers may be employed. Biomass carriers 340 are generally confined to the volume above diffusers 330, by the movement of air bubbles of the diffusers.

At the bottom of the aerobic water purification subsystem 310, below diffusers 330 there is preferably provided a sludge settlement volume 342, which is equipped with a sludge outlet 344.

Preferably the structure and operation of the aerobic water purification subsystem 310 is in accordance with the teachings of applicant/assignee's European Published Patent Application Nos. 1401775 and 2049443, and U.S. Published Patent Application No. 2009/0211972.

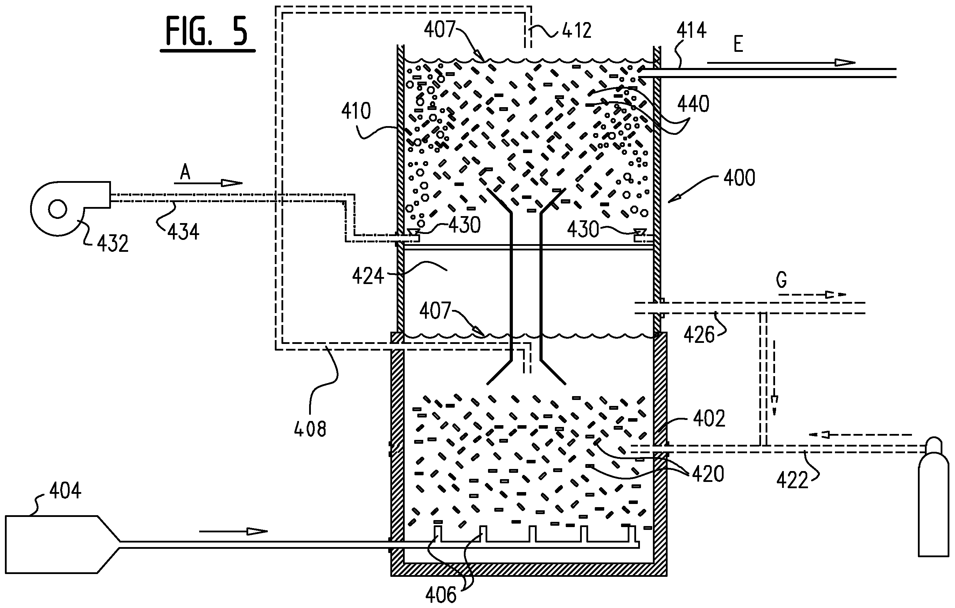

Reference is now made to Fig. 5 for illustrative purposes only, which is a simplified illustration of a synergetic anaerobic/aerobic water purification system as an alternative to the present invention. As seen in Fig. 5, there is provided an integrated reactor, designated generally by reference numeral 400, which includes an anaerobic water purification subsystem 402, receiving water to be treated, such as waste water, at an inlet 404. Preferably the waste water is supplied from below by means of a plurality of nozzles 406, which are coupled to inlet 404. The water level in anaerobic water purification subsystem 402 is typically as designated by reference numeral 407.

The anaerobic water purification subsystem 402 provides an anaerobic-treated water output via an outlet 408 to an aerobic water purification subsystem 410, integrated with the anaerobic water purification subsystem 402 and
preferably physically located there above, which receives the anaerobic-treated water output at an inlet 412 and provides an anaerobic- and aerobic-treated water output as an effluent at an outlet 414. If appropriate, the effluent from outlet 414 may be further treated by any suitable technique.

The anaerobic water purification subsystem 402 includes a multiplicity of biomass carriers 420 which are disposed in water to be treated. Biomass carriers 420 are operative to support anaerobic microorganisms. Any other suitable biomass carriers may be employed.

Optionally, an inert gas, such as nitrogen may be periodically introduced into the water to be treated via a gas supply inlet 422 in order to produce limited relative movement of the biomass carriers 420 in order to decluster the carriers and prevent clogging thereof. Alternatively, this can be accomplished by a circulation pump disposed within the subsystem 102.

Gas, principally methane and carbon dioxide, generated by the anaerobic water purification in subsystem 402 rises to a gas collection volume 424 in a headspace above the water being treated in anaerobic water purification subsystem 402 and is preferably released for use via a generated gas outlet 426. Optionally, some of the generated gas may be supplied via gas supply inlet 422 in addition to or in place of the inert gas.

Pressure in the anaerobic subsystem causes the anaerobic treated water from to rise from anaerobic subsystem 402 through outlet 408 to inlet 412 in aerobic water treatment subsystem 410. Inlet 412 is preferably located in a lower portion of the aerobic subsystem 410.
Disposed above inlet 412 there are preferably provided a plurality of air diffusers 430 which are coupled to a source of pressurized air 432, such as a compressor, via a pressurized air conduit 434.

The water level in aerobic water purification subsystem 410 is typically as designated by reference numeral 407. A multiplicity of biomass carriers 440 are disposed in water to be treated in aerobic water purification subsystem 400 and are operative to support anaerobic microorganisms. Any other suitable biomass carriers may be employed. Biomass carriers 440 are generally confined to the volume above diffusers 430, by the movement of air bubbles of the diffusers.

Preferably the structure and operation of the aerobic water purification subsystem 410 is in accordance with the teachings of applicant/assignee's European Published Patent Application Nos. 1401775 and 2049443, and U.S. Published Patent Application No. 2009/0211972.

### Experiment 1

A lab scale anaerobic reactor of 19 liter, with an height of 2 meter and a diameter of 11 cm, was used for a first experiment illustrating the principle of immobilizing anaerobic biomass unto biomass carrier material. A fermented molasses product was fed to the reactor. The volumetric loading rate (VLR) was controlled by adjustments of the COD concentration and feed flow. The reactor was operated in downflow configuration. The fluid velocity ranged from 0,25 m/h up to 0.67 m/h. The pH was adjusted to pH 7 with NaOH, the temperature was constantly 35°C.

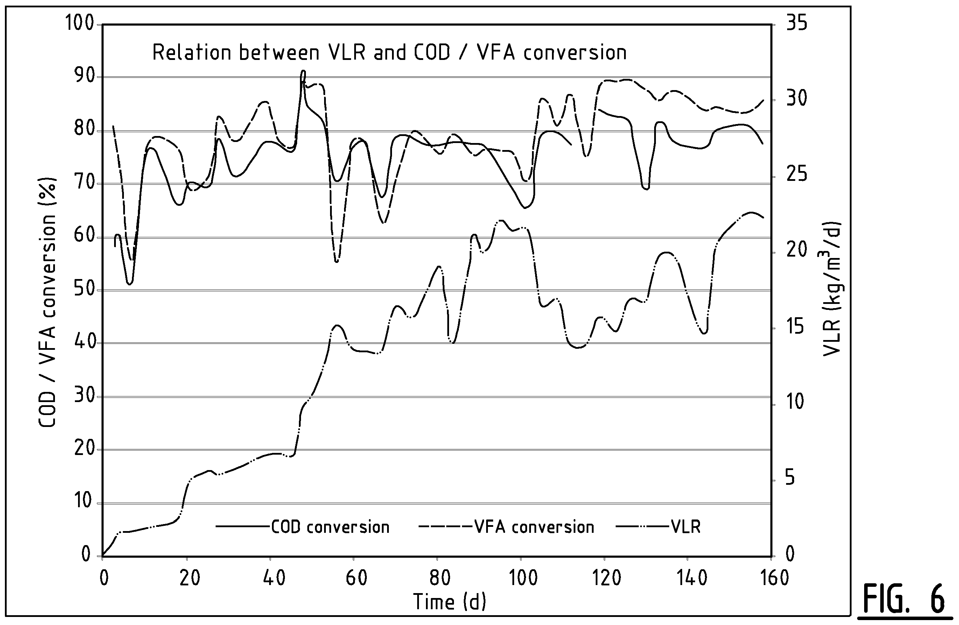

Figure 6 shows the relation between the applied VLR (in kg/m³/d) and the conversion (in %) of COD and VFA (with COD conversion in a solid line, VFA conversion in a dashed line and VLR in a dashed-dotted line). During the experiment an increased biomass development upon the carrier material was observed, this allowed higher VLR. The system showed a stable conversion of VFA and COD up to a VLR of 22 kg/m³/d.

### Experiment 2

A DANA reactor with an anaerobic part of 2,35 m³, a height of 3 meters, a diameter of 1 meters, carrier bed height of 1.3 meter, surface area of 0.78 m², and an aerobic part having a height of 3.5 meter, a height of 3 meter, a carrier bed height of 1.3 meter, and a diameter of 1 meter, was used to treat waste water from a starch factory. Waste water with an average COD concentration of 5 g/l was treated. The anaerobic reactor was operated in downflow mode. With a maximum of 200 l/h of waste water was fed, combined with a recirculation flow of 400 l/h, the downflow velocity reached was 0.76 m/h. The dissolved oxygen level in the aerobic tank was maintained at 2 mg/l. Temperature of the influent was 35°C - 37°C, and the pH was maintained at 6.8 with NaOH.

Inoculation of the anaerobic tank took place using 10% inoculated carrier material as top part of the carrier bed. Within one month a volumetric loading rate (VLR) of 10 kg/m³/d was reached. COD and VFA conversion (in %) of the total DANA reactor is plotted against the VLR (in kg/m³/d) is displayed in graph 7 (with COD conversion in diamonds, VFA conversion in squares, and VLR in triangles). The average conversion of the anaerobic part was 80%, the remaining COD/VFA was converted for 90% by the aerobic reactor. The total average conversion for the DANA reactor was 95%.

## Claims

1. Anaerobic/aerobic liquid purification system (2,100,200) comprising a reactor, wherein the reactor comprises :
- an anaerobic liquid purification subsystem (4,102,202)with an inlet (10,104,204) for receiving liquid to be treated, and an outlet (108,208) providing an anaerobic-treated liquid output; and
- an aerobic liquid purification subsystem (34,110,210), integrated with the anaerobic liquid purification subsystem (4,102,202), with an inlet (112 from below, 212 from above) for receiving the anaerobic-treated liquid output and an outlet (114,214) for providing an anaerobic- and aerobic-treated liquid output, wherein the inlet (10,104,204) of the aerobic subsystem (34,110,210) is connected with connecting means (30A, 30B) to the outlet (108,208) of the anaerobic subsystem, **characterized in that** the anaerobic liquid purification subsystem (4,102,202) includes biomass carriers (32,120,220) for supporting anaerobic microorganisms, and wherein the liquid to be treated is introduced to the reactor in a down flow stream from the top of the anaerobic subsystem (4,102,202) on top of a fluidizing bed (18) of the biomass carriers (32,120,220).

2. Anaerobic/aerobic liquid purification system (2,100,200) according to claim 1, wherein pressure in the anaerobic liquid purification subsystem (2,100,200) is operative to pump the anaerobic-treated liquid output with the connecting means (30A, 30B) from the anaerobic liquid purification subsystem (4,102,202) to the aerobic liquid purification subsystem (34,110,210).

3. Anaerobic/aerobic liquid purification system (2,100,200) according to claim 1 or 2, further comprising a gas collection volume (20) located in a headspace (20,124,224) above the anaerobic liquid purification subsystem (4) for collecting gas produced by the anaerobic liquid purification system (4,102,202).

4. Anaerobic/aerobic liquid purification system (2,100,200) according to claim 1, 2 or 3, wherein the aerobic liquid purification subsystem (34,110,210) is located physically above the anaerobic liquid purification subsystem (4,102,202).

5. Anaerobic/aerobic liquid purification system (2,100,200) according to any of claims 1-4, further comprising gas supply means (22,122,222) for supplying gas to the anaerobic liquid purification subsystem (4,102,202) for mixing.

6. Anaerobic/aerobic liquid purification system (2,100,200) according to claim 5, wherein the gas supply means (22,122,222) is connected to the gas collection volume (20,124,224) according to claim 3 to supply gas from the headspace to the gas supply means.

7. Anaerobic/aerobic liquid purification system (2,100,200) according to any of claims 1-6, wherein aerobic liquid purification subsystem (34,110,210) further comprising moving bed biofilm reactor means (38).

8. Anaerobic/aerobic liquid purification system (2,100,200) according to any of claims 1-7, further comprising liquid recirculation means (26, 48) to recirculate anaerobic and/or aerobic effluent.

9. Anaerobic/aerobic liquid purification method comprising the steps of:
- anaerobic purifying of liquid in an anaerobic liquid purification subsystem (4,102,202) provided with an anaerobic-treated liquid output;
- aerobic purifying of liquid in an aerobic liquid purification subsystem (34,110,210) provided with an inlet (10,104,204) for receiving the anaerobic-treated liquid output; and
- integrating the subsystems by connecting the outlet (108,208)of the anaerobic subsystem to the inlet (10,104,204) of the aerobic subsystem with connecting means (30A, 30B), wherein the anaerobic liquid purification subsystem (4,102,202) is provided with biomass carriers (32) for supporting anaerobic microorganisms, wherein the liquid to be treated is introduced to the reactor in a down flow stream from the top of the anaerobic subsystem (4,102,202) on top of a fluidizing bed (18) of the biomass carriers (32).

10. Anaerobic/aerobic liquid purification method according to claim 9, wherein pressure in the anaerobic liquid purification subsystem (4,102,202) is operative to pump the anaerobic-treated liquid output from the anaerobic liquid purification to the aerobic liquid purification.

11. Anaerobic/aerobic liquid purification method according to claim 9 or 10, wherein the aerobic liquid purification utilizes biomass carriers (32) for supporting microorganisms.

12. Anaerobic/aerobic liquid purification method according to claims 9, 10 or 11, wherein the aerobic liquid purification includes moving bed biofilm reactor functionality.

13. Anaerobic/aerobic liquid purification method according to claim 12, further comprising supplying gas to the anaerobic liquid purification subsystem (4,102,202) for causing relative movement of the biomass carriers (32).

14. Anaerobic/aerobic liquid purification method according to claim 12 or 13, wherein the supplying of gas utilizes gas produced in the anaerobic liquid purification subsystem (4,102,202).

## Patentansprüche

1. Anaerobes/aerobes Flüssigkeitsreinigungssystem (2, 100, 200), das einen Reaktor umfasst, wobei der Reaktor Folgendes umfasst:
- ein anaerobes Flüssigkeitsreinigungssubsystem (4, 102, 202) mit einem Einlass (10, 104, 204) zum Aufnehmen zu behandelnder Flüssigkeit und einem Auslass (108, 208), der eine Ausgabe anaerob behandelter Flüssigkeit bereitstellt; und
- ein aerobes Flüssigkeitsreinigungssubsystem (34, 110, 210), integriert mit dem anaeroben Flüssigkeitsreinigungssubsystem (4, 102, 202), mit einem Einlass (112 von unten, 212 von oben) zum Aufnehmen der Ausgabe anaerob behandelter Flüssigkeit und einem Auslass (114, 214) zum Bereitstellen einer Ausgabe anaerob und aerob behandelter Flüssigkeit, wobei der Einlass (10, 104, 204) des aeroben Subsystems (34, 110, 210) durch ein Verbindungsmittel (30A, 30B) mit dem Auslass (108, 208) des anaeroben Subsystems verbunden ist, **dadurch gekennzeichnet, dass** das anaerobe Flüssigkeitsreinigungssubsystem (4, 102, 202) Biomasseträger (32, 120, 220) zum Tragen anaerober Mikroorganismen einschließt und wobei die zu behandelnde Flüssigkeit in den Reaktor in einem Abwärtsflussstrom von dem Oberteil des anaeroben Subsystems (4, 102, 202) auf dem Oberteil eines Fließbetts (18) der Biomasseträger (32, 120, 220) eingeleitet wird.

2. Anaerobes/aerobes Flüssigkeitsreinigungssystem (2, 100, 200) gemäß Anspruch 1, wobei Druck in dem anaeroben Flüssigkeitsreinigungssubsystem (2, 100, 200) wirksam ist, die Ausgabe anaerob behandelter Flüssigkeit durch das Verbindungsmittel (30A, 30B) von dem anaeroben Flüssigkeitsreinigungssubsystem (4, 102, 202) zu dem aeroben Flüssigkeitsreinigungssubsystem (34, 110, 210) zu pumpen.

3. Anaerobes/aerobes Flüssigkeitsreinigungssystem (2, 100, 200) gemäß Anspruch 1 oder 2, das weiter ein Gassammelvolumen (20), das in einem Kopfraum (20, 124, 224) über dem anaeroben Flüssigkeitsreinigungssubsystem (4) angeordnet ist, zum Sammeln von Gas, das durch das anaerobe Flüssigkeitsreinigungssystem (4, 102, 202) produziert wird, umfasst.

4. Anaerobes/aerobes Flüssigkeitsreinigungssystem (2, 100, 200) gemäß Anspruch 1, 2 oder 3, wobei das aerobe Flüssigkeitsreinigungssubsystem (34, 110, 210) physikalisch über dem anaeroben Flüssigkeitsreinigungssubsystem (4, 102, 202) angeordnet ist.

5. Anaerobes/aerobes Flüssigkeitsreinigungssystem (2, 100, 200) gemäß einem der Ansprüche 1 bis 4, das weiter ein Gaszufuhrmittel (22, 122, 222) zum Zuführen von Gas zu dem anaeroben Flüssigkeitsreinigungssubsystem (4, 102, 202) zum Mischen umfasst.

6. Anaerobes/aerobes Flüssigkeitsreinigungssystem (2, 100, 200) gemäß Anspruch 5, wobei das Gaszufuhrmittel (22, 122, 222) mit dem Gassammelvolumen (20, 124, 224) gemäß Anspruch 3 verbunden ist, um Gas aus dem Kopfraum dem Gaszufuhrmittel zuzuführen

7. Anaerobes/aerobes Flüssigkeitsreinigungssystem (2, 100, 200) gemäß einem der Ansprüche 1 bis 6, wobei aerobes Flüssigkeitsreinigungssubsystem (34, 110, 210) weiter ein Bewegtbettbiofilm-Reaktormittel (38) umfasst.

8. Anaerobes/aerobes Flüssigkeitsreinigungssystem (2, 100, 200) gemäß einem der Ansprüche 1 bis 7, das weiter ein Flüssigkeitsrezirkulationsmittel (26, 48) zum Rezirkulieren von anaerobem und/oder aerobem Abwasser umfasst.

9. Anaerobes/aerobes Flüssigkeitsreinigungsverfahren, das die Schritte umfasst:
- anaerobes Reinigen von Flüssigkeit in einem anaeroben Flüssigkeitsreinigungssubsystem (4, 102, 202), das mit einer Ausgabe anaerob behandelter Flüssigkeit versehen ist;
- aerobes Reinigen von Flüssigkeit in einem aeroben Flüssigkeitsreinigungssubsystem (34, 110, 210), das mit einem Einlass (10, 104, 204) zum Aufnehmen der Ausgabe anaerob behandelter Flüssigkeit bereitgestellt ist; und
- Integrieren der Subsysteme durch Verbinden des Auslasses (108, 208) des anaeroben Subsystems mit dem Einlass (10, 104, 204) des aeroben Subsystems durch ein Verbindungsmittel (30A, 30B), wobei das anaerobe Flüssigkeitsreinigungssubsystem (4, 102, 202) mit Biomasseträgern (32) zum Tragen anaerobe Mikroorganismen versehen ist, wobei die zu behandelnde Flüssigkeit in den Reaktor in einem Abwärtsflussstrom von dem Oberteil des anaeroben Subsystems (4, 102, 202) auf dem Oberteil eines Fließbetts (18) der Biomasseträger (32) eingeleitet wird.

10. Anaerobes/aerobes Flüssigkeitsreinigungsverfahren gemäß Anspruch 9, wobei Druck in dem anaeroben Flüssigkeitsreinigungssubsystem (4, 102, 202) wirksam ist, die Ausgabe anaerob behandelter Flüssigkeit von der anaeroben Flüssigkeitsreinigung zu der aeroben Flüssigkeitsreinigung zu pumpen.

11. Anaerobes/aerobes Flüssigkeitsreinigungsverfahren gemäß Anspruch 9 oder 10, wobei die aerobe Flüssigkeitsreinigung Biomasseträger (32) zum Tragen von Mikroorganismen verwendet.

12. Anaerobes/aerobes Flüssigkeitsreinigungsverfahren gemäß Anspruch 9, 10 oder 11, wobei die aerobe Flüssigkeitsreinigung eine Bewegtbettbiofilm-Reaktorfunktionalität einschließt.

13. Anaerobes/aerobes Flüssigkeitsreinigungsverfahren gemäß Anspruch 12, das weiter Zuführen von Gas zu dem anaeroben Flüssigkeitsreinigungssubsystem (4, 102, 202) zum Bewirken relativer Bewegung der Biomasseträger (32) umfasst.

14. Anaerobes/aerobes Flüssigkeitsreinigungsverfahren gemäß Anspruch 12 oder 13, wobei das Zuführen von Gas Gas verwendet, das in dem anaeroben Flüssigkeitsreinigungssubsystem (4, 102, 202) produziert wird.

## Revendications

1. Système de purification de liquide anaérobie/aérobie (2, 100, 200) comprenant un réacteur, dans lequel le réacteur comprend :
- un sous-système de purification de liquide anaérobie (4, 102, 202) présentant une entrée (10, 104, 204) pour recevoir du liquide devant être traité, et une sortie (108, 208) fournissant un débit de liquide traité par voie anaérobie ; et
- un sous-système de purification de liquide aérobie (34, 110, 210), intégré avec le sous-système de purification de liquide anaérobie (4, 102, 202), présentant une entrée (112 du dessous, 212 du dessus) pour recevoir le débit de liquide traité par voie anaérobie et une sortie (114, 214) pour fournir un débit de liquide traité par voie anaérobie et aérobie, dans lequel l'entrée (10, 104, 204) du sous-système aérobie (34, 110, 210) est raccordée par un moyen de raccordement (30A, 30B) à la sortie (108, 208) du sous-système anaérobie, **caractérisé en ce que** le sous-système de purification de liquide anaérobie (4, 102, 202) inclut des supports à biomasse (32, 120, 220) pour supporter des microorganismes anaérobies, et dans lequel le liquide devant être traité est introduit dans le réacteur dans un flux à écoulement descendant à partir du haut du sous-système anaérobie (4, 102, 202) en haut d'un lit fluidisé (18) des supports à biomasse (32, 120, 220).

2. Système de purification de liquide anaérobie/aérobie (2, 100, 200) selon la revendication 1, dans lequel la pression dans le sous-système de purification de liquide anaérobie (2, 100, 200) a pour fonction de pomper le débit de liquide traité par voie anaérobie avec le moyen de raccordement (30A, 30B) du sous-système de purification de liquide anaérobie (4, 102, 202) au sous-système de purification de liquide aérobie (34, 110, 210).

3. Système de purification de liquide anaérobie/aérobie (2, 100, 200) selon la revendication 1 ou 2, comprenant en outre un volume de collecte de gaz (20) situé dans un espace de tête (20, 124, 224) au-dessus du sous-système de purification de liquide anaérobie (4) pour collecter le gaz produit par le système de purification de liquide anaérobie (4, 102, 202) .

4. Système de purification de liquide anaérobie/aérobie (2, 100, 200) selon la revendication 1, 2 ou 3, dans lequel le sous-système de purification de liquide aérobie (34, 110, 210) est situé physiquement au-dessus du sous-système de purification de liquide anaérobie (4, 102, 202).

5. Système de purification de liquide anaérobie/aérobie (2, 100, 200) selon l'une quelconque des revendications 1 à 4, comprenant en outre un moyen de fourniture de gaz (22, 122, 222) pour fournir du gaz au sous-système de purification de liquide anaérobie (4, 102, 202) pour le mélanger.

6. Système de purification de liquide anaérobie/aérobie (2, 100, 200) selon la revendication 5, dans lequel le moyen de fourniture de gaz (22, 122, 222) est raccordé au volume de collecte de gaz (20, 124, 224) selon la revendication 3 pour fournir du gaz de l'espace de tête au moyen de fourniture de gaz.

7. Système de purification de liquide anaérobie/aérobie (2, 100, 200) selon l'une quelconque des revendications 1 à 6, dans lequel le sous-système de purification de liquide aérobie (34, 110, 210) comprend en outre un moyen réacteur à film biologique à lit mobile (38).

8. Système de purification de liquide anaérobie/aérobie (2, 100, 200) selon l'une quelconque des revendications 1 à 7, comprenant en outre un moyen de recyclage du liquide (26, 48) pour recycler l'effluent anaérobie et/ou aérobie.

9. Procédé de purification de liquide anaérobie/aérobie comprenant les étapes de :
- purification anaérobie du liquide dans un sous-système de purification de liquide anaérobie (4, 102, 202) présentant un débit de liquide traité par voie anaérobie ;
- purification aérobie du liquide dans un sous-système de purification de liquide aérobie (34, 110, 210) présentant une entrée (10, 104, 204) pour recevoir le débit de liquide traité par voie anaérobie ; et
- intégration des sous-systèmes par raccordement de la sortie (108, 208) du sous-système anaérobie à l'entrée (10, 104, 204) du sous-système aérobie avec un moyen de raccordement (30A, 30B), dans lequel le sous-système de purification de liquide anaérobie (4, 102, 202) comporte des supports à biomasse (32) pour supporter des microorganismes anaérobies, dans lequel le liquide devant être traité est introduit dans le réacteur dans un flux à écoulement descendant à partir du haut du sous-système anaérobie (4, 102, 202) en haut d'un lit fluidisé (18) des supports à biomasse (32).

10. Procédé de purification de liquide anaérobie/aérobie selon la revendication 9, dans lequel la pression dans le sous-système de purification de liquide anaérobie (4, 102, 202) a pour fonction de pomper le débit de liquide traité par voie anaérobie de la purification de liquide par voie anaérobie à la purification de liquide par voie aérobie.

11. Procédé de purification de liquide anaérobie/aérobie selon la revendication 9 ou 10, dans lequel la purification de liquide par voie aérobie utilise des supports à biomasse (32) pour supporter des microorganismes.

12. Procédé de purification de liquide anaérobie/aérobie selon les revendications 9, 10 ou 11, dans lequel la purification de liquide par voie aérobie inclut une fonctionnalité réacteur à film biologique à lit mobile.

13. Procédé de purification de liquide anaérobie/aérobie selon la revendication 12, comprenant en outre la fourniture de gaz au sous-système de purification de liquide anaérobie (4, 102, 202) pour entraîner un mouvement relatif des supports à biomasse (32).

14. Procédé de purification de liquide anaérobie/aérobie selon la revendication 12 ou 13, dans lequel la fourniture de gaz utilise le gaz produit dans le sous-système de purification de liquide anaérobie (4, 102, 202).
